# FASCICULE DE BREVET EUROPEEN

(11) **EP 3 346 153 B1**
(45) Date de publication et mention de la délivrance du brevet: **17.06.2020**
(21) Numéro de dépôt: 17205200.3
(22) Date de dépôt: 04.12.2017
(51) Int. Cl.: F16D 48/02

(54) **LIMITEUR DE DEBIT DE COMMANDE HYDRAULIQUE D'EMBRAYAGE**
DURCHSATZBEGRENZER EINER HYDRAULISCHEN KUPPLUNGSSTEUERUNG
FLOW LIMITER FOR HYDRAULIC CLUTCH CONTROL

(30) Priorité: 05.01.2017 FR 1750105
(43) Date de publication de la demande: 11.07.2018
(73) Titulaire: RENAULT s.a.s., 92100 Boulogne-Billancourt (FR)
(72) Inventeur: CHOUCHANA, Richard, 06100 NICE (FR); COGNEVILLE, Francis, 91400 ORSAY (FR)

(56) Documents cités:
- EP-A1- 2 345 825
- EP-A2- 1 674 754
- DE-A1-102004 035 899
- DE-A1-102011 010 878
- DE-A1-102014 012 722

## Description

La présente invention se rapporte à la commande hydraulique des embrayages.

Plus précisément, elle a pour objet un limiteur de débit de commande hydraulique d'embrayage, placé sur une conduite hydraulique qui relie un émetteur de débit à un récepteur hydraulique apte à ouvrir l'embrayage sous la poussée hydraulique d'un fluide de commande, établie dans la conduite par l'émetteur. Ce limiteur comprend une cuvette d'appui intérieure fixe et un clapet d'obturation du passage, mobile à l'intérieur du limiteur entre une première position à l'écart du clapet, où il obture partiellement le passage du fluide, et une deuxième position de placage contre la cuvette, où il n'obture pas le débit de retour vers l'émetteur lors de la fermeture de l'embrayage.

La chaîne cinématique d'un véhicule doit être protégée contre des reprises de couple trop brutales en phase de réembrayage, lors de la fermeture de l'embrayage d'entrée de la transmission contrôlant le passage du couple moteur dans la chaîne cinématique.

Pour limiter l'impact des à-coups de couple liés aux réembrayages trop rapides sur la chaîne cinématique, il existe des « limiteurs de pointe de couple », (PTL pour « *Peak Torque Limiter* » en anglais), intégrés dans une conduite de la commande hydraulique d'embrayage. Leur fonction est de ralentir la fermeture de l'embrayage en cas de relâchement brutal de la pédale. Un tel système est décrit dans la publication DE 10 2008 058 674.

D'autres exemples de tels systèmes peuvent être trouvés dans: EP 1 674 754 A2, DE 10 2014 012722 A1 et DE 10 2011 010878 A1.

L'efficacité des PTL pour protéger la chaîne cinématique (double volant amortisseur, transmission, pignons), des chocs, notamment au démarrage, est démontrée. Cependant, ils sont sensibles au froid, et peuvent perturber la reprise de mouvement, en empêchant la pédale d'embrayage de remonter.

Pour pallier cet inconvénient, on peut rajouter à l'intérieur du PTL un ressort de pré-charge, agissant sur un élément du système pour faciliter son retour en position inactive. Dans la pratique, le fonctionnement du ressort de pré-charge s'avère aléatoire, car il est lié aux variations de viscosité du fluide de commande.

La présente invention a pour but de contrôler l'action d'un limiteur de débit dans une commande hydraulique d'embrayage.

Dans ce but, elle propose que le clapet soit maintenu dans sa première position par un électro-aimant, ou libéré par celui-ci en direction de la cuvette, en fonction de l'état du fluide de commande.

Selon l'invention, le limiteur comporte une sonde de température intégrée à la cuvette d'appui.

De préférence, le clapet est libéré par l'électroaimant pour se plaquer contre la cuvette lors du retour du fluide vers l'émetteur, en dessous d'un seuil de température de fluide détecté par la sonde.

La présente invention sera mieux comprise à la lecture de la description suivante d'un mode de réalisation non limitative de celle-ci, en se reportant aux dessins annexés, sur lesquels :
- les figues 1, 1A, 2 et 2A illustrent le fonctionnement d'un dispositif de limitation de débit dans une commande hydraulique d'embrayage,
- les figures 3A, 3B, 3C, 3D, portent sur un nouveau limiteur de débit,
- la figure 4 se rapporte à un deuxième mode de réalisation de l'invention,
- les figures 5A et 5B illustrent un exemple d'un limiteur de débit ne faisant pas partie de l'invention,
- la figure 6 est une illustration graphique d'une méthode de diagnostic, faisant partie de l'invention,
- les figures 7A et 7B montrent une application de celle-ci sur un smartphone, et
- les figures 8A à 8C complètent cette application.

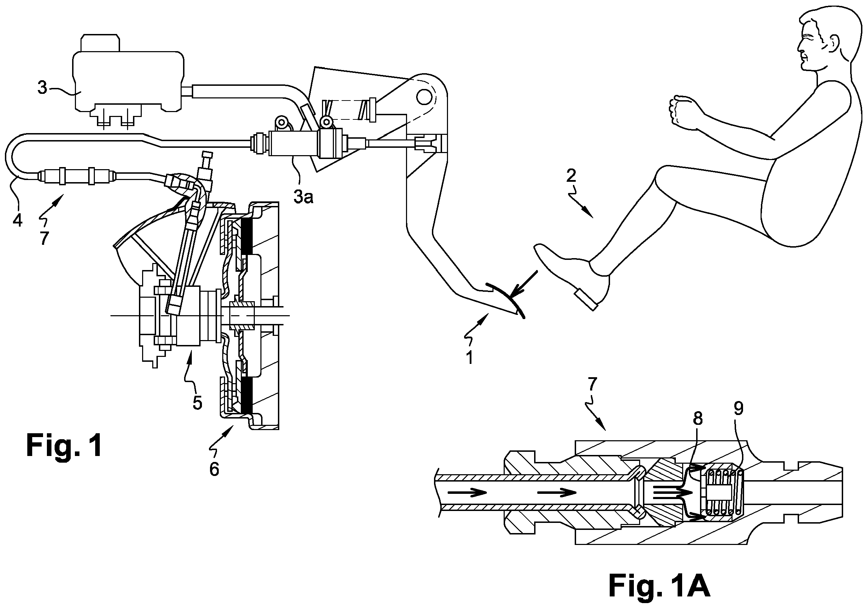

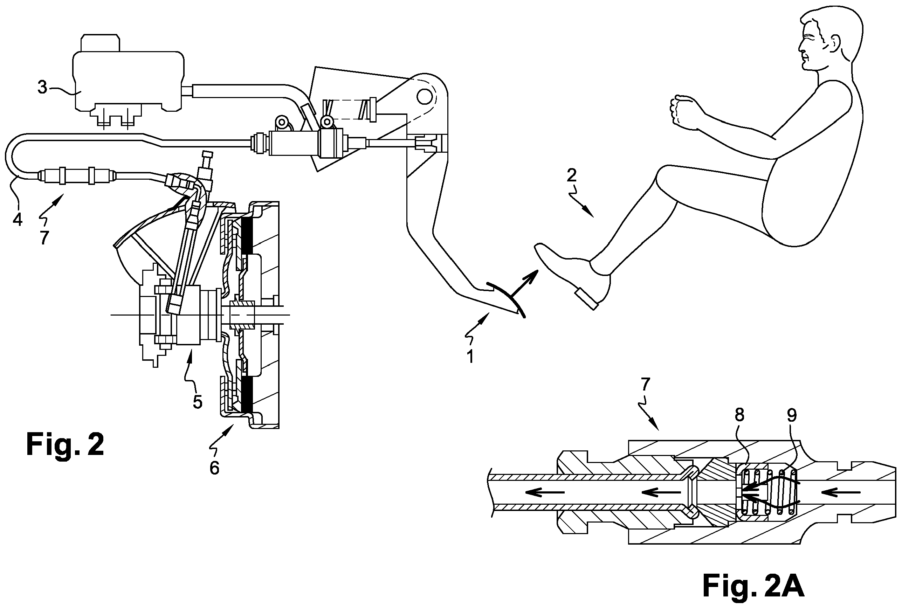

Sur les figures 1 et 2, on voit une pédale d'embrayage 1, soumise à l'action du conducteur 2, un réservoir d'huile 3, un émetteur de débit 3a, et une conduite 4 reliant celui-ci à un actionneur hydraulique 5 de l'embrayage 6, tel qu'un cylindre récepteur de commande hydraulique d'embrayage apte à ouvrir l'embrayage sous la poussée du fluide de commande. Un limiteur de débit 7 est placé sur la conduite 4, entre l'émetteur 3a et l'actionneur 5. Son fonctionnement est expliqué par les figures 1A et 2A. Il comprend une cuvette d'appui intérieure 10, fixe, et un clapet d'obturation 8 du passage du fluide. Le clapet 8 est mobile à l'intérieur du limiteur entre une première position (figure 1A) et une deuxième position (figure 2A). Il comporte également un ressort de tarage 9.

Lors d'une opération de débrayage (figure 1A), le clapet 8 est ouvert. Le fluide transite normalement à l'intérieur du limiteur 7, en direction de l'actionneur 5.Lors d'un ré-embrayage rapide (figure 2A), une restriction de section est activée par déplacement du clapet 8, dès que le débit est supérieur à l'effort de tarage du ressort 9. La restriction du débit ralentit la remontée de la pédale. En cas d'embrayage brusque, le reflux vers l'émetteur de débit 3a est limité. La manœuvre d'embrayage est amortie. Les pointes de couple sont évitées.

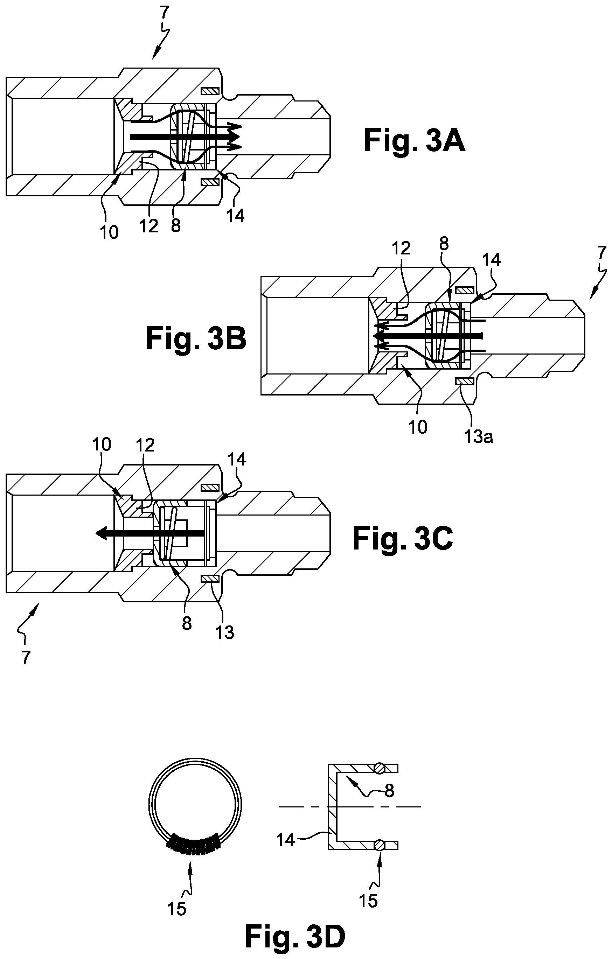

Le limiteur de débit 7 illustré par les figues 3A à 3D est conforme à un premier mode de réalisation de l'invention. Il comprend, comme le précédent, une cuvette d'appui intérieure fixe 10 et un clapet d'obturation 8 mobile. Dans une première position à l'écart de la cuvette (figures 3A et 3B), il obture partiellement le passage du fluide. Dans une deuxième position de placage contre la cuvette 10 (figure 3C), il n'obture pas le débit de retour vers l'émetteur lors de la fermeture de l'embrayage. Le limiteur 7 comprend également une sonde de température 12 intégrée à la cuvette 10, une bobine 13 intégrée dans le corps du limiteur et un électro-aimant 14 (détaillé sur la figure 3D). Un jonc d'arrêt à ouverture radiale 15, est commandé par l'électroaimant pour libérer le clapet 8.

Dans ce premier mode de réalisation, la libération du clapet est déclenchée en fonction de l'état du fluide de commande d'embrayage, sa température. Le clapet 8 est maintenu dans sa première position par l'électro-aimant 14, ou libéré par celui-ci en direction de la cuvette 10, en fonction de cet état.

Un calculateur réalise, au travers du réseau de transmission de données du véhicule, un contrôle de la température du fluide pour déclencher (ou non), la libération du clapet 8, par l'électro-aimant 14. La figure 3A illustre l'état du système en position débrayée. Lors d'un débrayage, le clapet 8 reste collé par la pression vers l'électroaimant 14 (figure 3A). Lors d'un ré-embrayage, le limiteur ne libère pas le clapet 8, tant que l'analyse ne détecte pas une température supérieure ou égale à un seuil déterminé, par exemple de 0°C (cf. figure 3B). Sous le seuil de température choisi, l'électroaimant 14 libère le clapet 8 (figure 3C). Il vient se placer en appui contre la cuvette 10, pour autoriser sans restriction, le retour du fluide de commande vers l'émetteur 3a. Le limiteur est neutralisé. Il est privé de son effet restrictif sur le débit de retour.

En d'autres termes, le clapet 8 est libéré par l'électroaimant 14 pour se plaquer contre la cuvette 10 lors du retour du fluide vers l'émetteur, en dessous du seuil de température de fluide détecté par la sonde 12 : lors d'un réembrayage rapide, l'électroaimant libère le clapet 8 vers la cuvette 10 pour supprimer la restriction de section : le reflux du fluide vers l'émetteur 3a n'est plus limité en cas d'embrayage brusque. La remontée de la pédale d'embrayage 2, peut s'effectuer normalement.

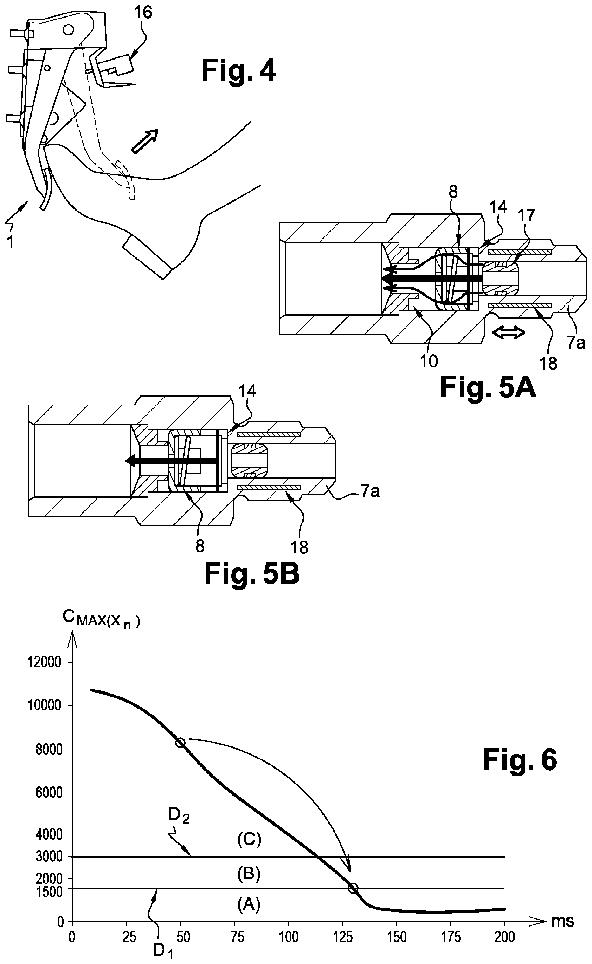

Dans un deuxième mode de réalisation de l'invention, l'électro-aimant 14 libère le clapet 8 en fonction de la viscosité du fluide de commande, ou en fonction de la viscosité de l'huile, et de la vitesse de remontée de la pédale 2. Le calculateur réalise alors un diagnostic du temps de remontée de la pédale à partir d'un capteur de vitesse de remontée 16 de la pédale 1 (représenté sur la figure 4), disposé à proximité de celle-ci. Les données transitent par l'intermédiaire du réseau général de transfert de données du véhicule, et les deux paramètres, de vitesse de remontée de la pédale, et de viscosité de l'huile (liée à la température), sont pris en compte simultanément.

De façon non limitative, les valeurs de seuil retenues pour libérer le clapet de restriction de débit 8, peuvent être les suivantes :
- au-dessus de 0°C, vitesse de remontée < 170ms,
- entre -20°C à 0°C, vitesse de remontée < 250ms,
- en dessous de -20°C, vitesse de remontée < 400ms.

Dans un troisième mode de réalisation, le critère retenu est la viscosité de l'huile liée à la température. Conformément aux figures 5A et 5B, ne faisant pas partie de l'invention, le limiteur comprend alors une jauge de déplacement de fluide 17 permettant de déterminer si la vitesse de déplacement du fluide autorise la libération du clapet par l'électro-aimant. La jauge 17 est placée à l'intérieur du limiteur 7, dans sa section de sortie 7a vers l'actionneur. Son déplacement est contrôlé par une bobine 18, intégrée dans le corps du limiteur. Avant que l'électroaimant 14 ne libère définitivement le clapet 7, la vitesse de déplacement du fluide est analysée pour en déduire sa viscosité, dès le premier coup de pédale. Tant que l'analyse ne détecte pas une vitesse de pédale compatible avec la fonction d'embrayage, le clapet 8 n'est pas libéré. Le couple d'impact est limité seulement à partir d'un certain débit (par exemple 18,9cm³/s à - 30°C). Une fois la vitesse de déplacement du fluide jugée conforme à l'enregistrement fait dans le calculateur, l'électroaimant 14 libère le clapet 8. Lors d'une opération de débrayage, le clapet 10 reste collé par la pression vers l'électroaimant 14. Lors d'un embrayage lent, il reste dans la même position (figure 5A). Lors d'un ré-embrayage rapide (figure 5B), l'électroaimant libère le clapet si la vitesse de déplacement du fluide est jugée conforme aux conditions requises. Le débit n'est plus limité.

Dans un quatrième mode de réalisation, illustré par la figure 6, les critères de passage de vitesses dans les configurations extrêmes sont pris en compte. Le calculateur, réalise un diagnostic lors de chaque passage de vitesses, en analysant le couple moteur instantané, la vitesse engagée au départ du mouvement de passage de vitesses, et la vitesse engagée à l'arrivée, afin de savoir s'il doit donner la consigne à l'électroaimant de libérer le clapet du limiteur. Un passage rapide, par exemple, de cinquième en deuxième rapport, peut déclencher la restriction de débit, en fonction d'un régime moteur élevé.

La figure 6 illustre sur un graphe une méthode de contrôle, basée sur une courbe de temps d'engagement d'embrayage en abscisses (en ms) selon le couple maximum C_{MAX} transmis dans les ressorts d'un double volant amortisseur (DVA) en ordonnées (Nm) lors d'un embrayage. Deux droites parallèles à l'axe des abscisses, D1 et D2, déterminent trois zones sur la cartographie, respectivement sans risque pour la durabilité de l'embrayage (A), avec un risque modéré (B), et avec un fort risque (C). Dans un exemple ne faisant pas partie de l'invention, le clapet 8 est libéré par l'électro-aimant lors d'un réembrayage de changement de rapport, en fonction de la valeur du couple moteur au début du changement, et de l'amplitude du changement de rapport opéré.

Sachant que pour les commandes d'embrayage sans limiteur de débit, la limite inférieure de durée de réembrayage est impérativement de 50 ms, une stratégie imposant grâce au limiteur piloté une durée minimum de 110 ms au temps d'engagement, limite partiellement les risques. Dans cet exemple, pour minimiser les risques d'impact sur la chaîne cinématique, le temps d'engagement doit être supérieur à 130 ms.

Dans un cinquième mode de réalisation de l'invention, il est prévu de digitaliser l'activation du limiteur de débit et de suivre sur un smartphone ou une tablette 22, les phases d'analyse. Cette méthode permet au conducteur d'activer et de désactiver la fonction PTL par le conducteur, à partir de son smartphone ou de sa tablette. Si la fonction est désactivée, le calculateur de la transmission (TCU pour « *Transmission Control Unit* ») peut écrêter toutes les valeurs de couple dans l'embrayage susceptibles de dégrader la chaîne cinématique. Lorsque la fonction est activée, le contrôle peut être assuré à partir de différents critères, par exemple ceux de systèmes de gestion du régime maxi du moteur, tels que les systèmes dits « *Idiot Start System ».*

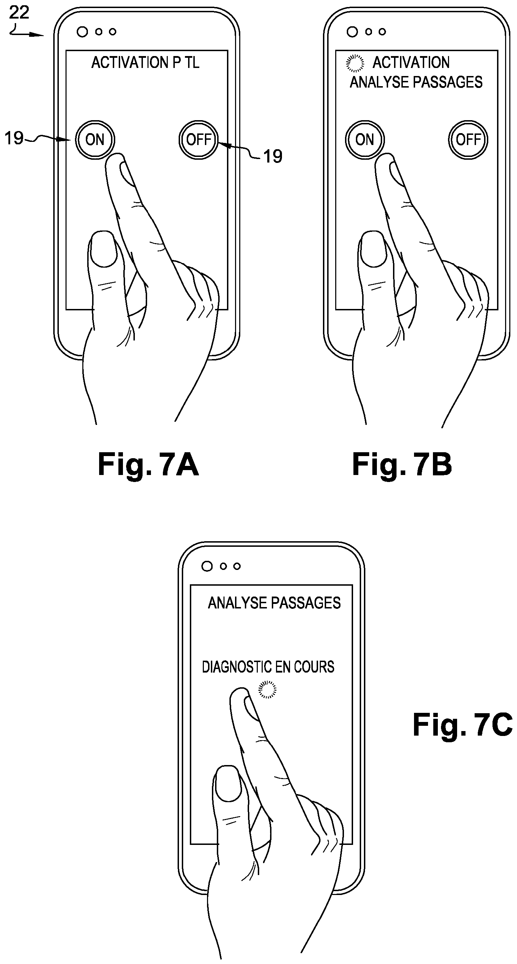

Dans une première version, illustrée par les figures 7A à 7C, l'affichage peut se limiter à une commande d'activation et de désactivation 19, et à l'indication des diagnostics et analyses en cours.

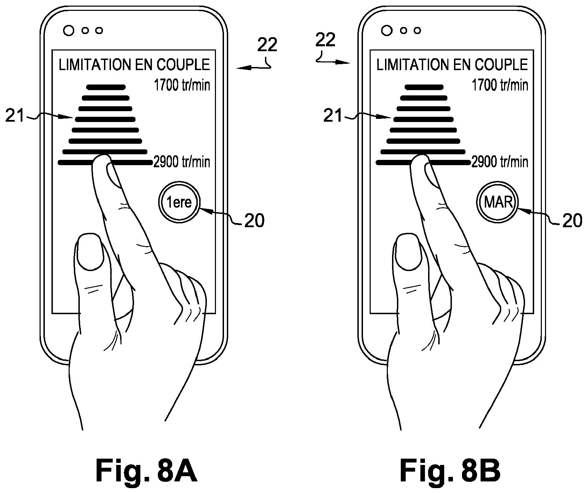

En complément, d'autres fonctions de réglage sont intégrables dans le smartphone ou la tablette. Un menu déroulant les rapports de boîte permet d'adapter le réglage du régime moteur enregistré, à chacun d'eux. Conformément aux figures 8A et 8B, cette option peut se combiner à la commande du réglage par glissement du doigt sur une zone de l'écran pour les tours/min à enregistrer, avant d'appuyer sur la touche de validation.

## Revendications

1. Limiteur de débit de commande hydraulique d'embrayage (7) apte à être placé sur une conduite de fluide hydraulique (4) qui relie un émetteur de débit (3a) à un récepteur (5) de commande apte à ouvrir l'embrayage sous la poussée hydraulique établie dans la conduite (4) par l'émetteur (3a), ce limiteur (7) comprenant une cuvette d'appui intérieure fixe (10) et un clapet d'obturation (8) du passage et un électroaimant, maintenu par l'électroaimant dans une première position à l'écart de la cuvette (10) où il obture partiellement le passage du fluide ou libéré par l'électro-aimant en direction de la cuvette, dans une deuxième position où il n'obture pas le débit de retour vers l'émetteur lors de la fermeture de l'embrayage, **caractérisé en ce que** le clapet (8) est maintenu dans sa première position par l'électroaimant (14), ou libéré par celui-ci en direction de la cuvette (10), en fonction de l'état du fluide de commande et **en ce qu'**il comporte une sonde de température (12) intégrée à la cuvette (10).

2. Limiteur de débit selon la revendication 1 ou 2, **caractérisé en ce que** le clapet (8) est libéré par l'électroaimant pour se plaquer contre la cuvette lors du retour du fluide vers l'émetteur en dessous d'un seuil de température de fluide détecté par la sonde (12).

3. Limiteur de débit selon la revendication 1, 2 ou 3 **caractérisé en ce que** l'électro-aimant (14) libère le clapet (8) en fonction de la viscosité du fluide de commande.

4. Limiteur de débit selon la revendication 4, **caractérisé en ce que** l'électro-aimant (14) libère le clapet (8) en fonction de la viscosité de l'huile et de la vitesse de remontée de la pédale d'embrayage (2).

5. Limiteur de débit selon l'une des revendications précédentes, **caractérisé en ce que** son activation et sa désactivation sont opérés par le conducteur à partir d'un smartphone ou d'une tablette (22).

6. Limiteur de débit selon la revendication 8, **caractérisé en ce que** ses états d'activation et de désactivation et les diagnostics en cours, sont affichés sur le smartphone ou la tablette (22).

7. Limiteur de débit selon la revendication 9, **caractérisé en ce qu'**un menu déroulant les rapports de boîte permet de régler sur le smartphone, ou la tablette (22), un régime moteur déclenchant son activation ou sa désactivation sur chacun d'eux.

## Patentansprüche

1. Durchsatzbegrenzer einer hydraulischen Kupplungssteuerung (7), der auf einer Hydraulikflüssigkeitsleitung (4) angeordnet werden kann, die einen Durchsatzgeber (3a) mit einem Steuerempfänger (5) verbinden kann, der die Kupplung unter dem hydraulischen Schub öffnen kann, der in der Leitung (4) vom Geber (3a) aufgebaut wird, wobei dieser Begrenzer (7) eine ortsfeste innere Auflageschale (10) und eine Durchgangsverschlussklappe (8) und einen Elektromagnet enthält, die vom Elektromagnet in einer ersten Stellung in Abstand zur Schale (10) gehalten wird, in der sie teilweise den Durchgang der Flüssigkeit verschließt, oder vom Elektromagnet in Richtung der Schale in einer zweiten Stellung freigegeben wird, in der sie den Rückdurchsatz zum Geber beim Schließen der Kupplung nicht verschließt, **dadurch gekennzeichnet, dass** die Klappe (8) vom Elektromagnet (14) in ihrer ersten Stellung gehalten oder von diesem in Richtung der Schale (10) freigegeben wird, abhängig vom Zustand der Steuerflüssigkeit, und dass er einen in die Schale (10) integrierten Temperaturfühler (12) aufweist.

2. Durchsatzbegrenzer nach Anspruch 1 oder 2, **dadurch gekennzeichnet, dass** die Klappe (8) vom Elektromagnet freigegeben wird, um sich bei der Rückkehr der Flüssigkeit zum Geber unterhalb einer vom Fühler (12) erfassten Flüssigkeitstemperaturschwelle gegen die Schale zu drücken.

3. Durchsatzbegrenzer nach Anspruch 1, 2 oder 3, **dadurch gekennzeichnet, dass** der Elektromagnet (14) die Klappe (8) abhängig von der Viskosität der Steuerflüssigkeit freigibt.

4. Durchsatzbegrenzer nach Anspruch 4, **dadurch gekennzeichnet, dass** der Elektromagnet (14) die Klappe (8) abhängig von der Viskosität des Öls und der Aufstiegsgeschwindigkeit des Kupplungspedals (2) freigibt.

5. Durchsatzbegrenzer nach einem der vorhergehenden Ansprüche, **dadurch gekennzeichnet, dass** seine Aktivierung und seine Deaktivierung vom Fahrer ausgehend von einem Smartphone oder einem Tablet (22) durchgeführt werden.

6. Durchsatzbegrenzer nach Anspruch 8, **dadurch gekennzeichnet, dass** seine Zustände der Aktivierung und Deaktivierung und die laufenden Diagnosen auf dem Smartphone oder dem Tablet (22) angezeigt werden.

7. Durchsatzbegrenzer nach Anspruch 9, **dadurch gekennzeichnet, dass** ein Dropdown-Menü der Getriebegänge es ermöglicht, auf dem Smartphone oder dem Tablet (22) eine Motordrehzahl zu regeln, die seine Aktivierung oder seine Deaktivierung auf jedem von ihnen auslöst.

## Claims

1. Flow limiter (7) for hydraulic clutch control, able to be positioned on a hydraulic-fluid line (4) connecting a flow emitter (3a) to a control receiver (5) able to open the clutch under the hydraulic thrust established in the line (4) by the emitter (3a), this limiter (7) comprising a fixed internal seating cup (10) and a shutter (8) for shutting off the passage, and an electromagnet, kept by the electromagnet in a first position away from the cup (10) in which it partially shuts off the passage for the fluid or released by the electromagnet towards the cup, into a second position in which it does not shut off the return flow towards the emitter during closing of the clutch, **characterized in that** the shutter (8) is kept in its first position by the electromagnet (14), or released thereby towards the cup (10), according to the state of the control fluid, and **in that** it comprises a temperature probe (12) incorporated into the cup (10).

2. Flow limiter according to Claim 1 or 2, **characterized in that** the shutter (8) is released by the electromagnet to press against the cup during the return of the fluid towards the emitter below a fluid temperature threshold detected by the probe (12).

3. Flow limiter according to Claim 1, 2 or 3, **characterized in that** the electromagnet (14) releases the shutter (8) according to the viscosity of the control fluid.

4. Flow limiter according to Claim 4, **characterized in that** the electromagnet (14) releases the shutter (8) according to the viscosity of the oil and to the speed at which the clutch pedal (2) is coming back up.

5. Flow limiter according to one of the preceding claims, **characterized in that** its activation and deactivation are performed by the driver from a smartphone or a tablet (22).

6. Flow limiter according to Claim 8, **characterized in that** its states of activation and of deactivation and the diagnostics in progress are displayed on the smartphone or the tablet (22).

7. Flow limiter according to Claim 9, **characterized in that** a menu setting out the gear box ratios allows an engine speed that triggers its activation or its deactivation to be set, on the smartphone or the tablet (22), for each of these.
